# FASCICULE DE BREVET EUROPEEN

(11) **EP 3 765 363 B1**
(45) Date de publication et mention de la délivrance du brevet: **10.12.2025**
(21) Numéro de dépôt: 19709959.1
(22) Date de dépôt: 13.03.2019
(51) Int. Cl.: B64C 27/30, B64C 27/22

(54) **VÉHICULE AÉRIEN COMPRENANT AU MOINS DEUX VOILURES TOURNANTES ALIGNÉES SELON SON AXE DE ROULIS**
LUFTFAHRZEUG MIT MINDESTENS ZWEI ROTIERENDEN FLÜGELN, DIE ENTLANG SEINER ROLLACHSE AUSGERICHTET SIND
AERIAL VEHICLE COMPRISING AT LEAST TWO ROTATING BLADES ALIGNED ALONG ITS ROLL AXIS

(30) Priorité: 13.03.2018 FR 1852172
(43) Date de publication de la demande: 20.01.2021
(73) Titulaire: Innostar, 92320 Chatillon (FR)
(72) Inventeur: SIMON, Jean-Michel, 92320 CHATILLON (FR)
(74) Mandataire: Cabinet Boettcher
(86) Numéro de dépôt international: PCT/EP2019/056316
(87) Numéro de publication internationale: WO 2019/175262

(56) Documents cités:
- WO-A1-2017/021608
- US-A- 2 247 034
- US-A- 2 949 254
- US-A- 3 074 487
- US-A- 3 693 910

## Description

La présente invention concerne un véhicule aérien du type notamment VTOL ou STOL.

### ARRIERE PLAN DE L'INVENTION

Un cas particulier de ce genre de véhicule consiste en un aérodyne hybride (à voilure fixe et voilures tournantes), à décollage et/ou atterrissage vertical ou court, du type drone, permettant à l'aérodyne de décoller et/ou d'atterrir verticalement ou sur de courtes distances, puis de se mouvoir horizontalement à grande vitesse, de taille petite ou moyenne doté d'une autonomie de vol importante. De tels aérodynes sont connus par exemple des documents WO-A1-2017/021608 et US-A-2247034.

Dans une réalisation de ce type d'appareil, il a été proposé une architecture à deux voilures tournantes successives dont les axes rotors sont espacées le long de l'axe de roulis du véhicule qui, lors de la vitesse de croisière de l'appareil, sont immobilisées l'une derrière l'autre (position de stockage) afin d'obtenir une traînée minimale en phase de vol de croisière. Ce résultat est obtenu en outre par un positionnement précis des pales le moins perturbant possible pour l'écoulement d'air environnant. C'est pour cette raison qu'on cherchera à aligner le plus strictement possible les extrémités voisines des pales dans leur position de stockage pour éliminer les reliefs et les solutions de continuité des surfaces en contact avec l'écoulement d'air environnant.

On sait que la puissance mécanique que l'on doit fournir à un rotor pour soulever une charge donnée est sensiblement inversement proportionnelle au diamètre dudit rotor lui-même proportionnel à la longueur des pales, donc de la pale en cas d'une voilure mono pale.

On sait également que le contrepoids dans le cas d'une mono pale est un poids mort qui, plus il est élevé, donc plus près de l'axe rotor, plus il obère la charge utile offerte par l'appareil.

On se trouve alors en présence de deux contraintes antagonistes qu'il faut arbitrer.

La présente invention a pour objet une caractéristique dimensionnelle qui permet d'arbitrer ces deux contraintes de manière optimale.

### OBJET DE L'INVENTION

A cet effet, l'invention a pour objet un aérodyne hybride selon la revendication 1.

On sait que, toutes choses égales par ailleurs et notamment à puissance motrice égale, en privilégiant la longueur de la pale, donc la portance, on se doit de rapprocher le contrepoids de l'axe du mat rotor, donc d'en augmenter la masse. La charge utile est calculée comme la différence entre la portance et la fraction de poids mort de l'appareil. On comprend ainsi qu'il y a compétition entre l'accroissement de portance et l'accroissement du poids du contrepoids qui est un accroissement de poids mort. Cette compétition est de manière surprenante, en faveur de la portance, donc de la charge utile, jusqu'au point où le rapport entre la longueur de la pale et la longueur du contrepoids se situe autour de 20%. En dessous de cette proportion, l'accroissement du poids mort est tel qu'il entraîne une diminution de la charge utile.

Selon l'invention, les deux rotors sont mono pale, la longueur totale de chaque pale étant sensiblement égale à l'entraxe des deux mâts rotors.

D'autres caractéristiques et avantages de l'invention ressortiront de la description donnée ci-après d'un exemple de réalisation de l'invention.

### BREVE DESCRIPTION DES DESSINS

Il sera fait référence aux dessins annexés dans lesquels :
- la figure 1 est un schéma de la géométrie d'un aérodyne selon l'invention à deux voilures mono-pales successives,
- les figures 2 et 3, illustrent par des graphiques l'optimisation de la configuration de la voilure mono pale.

### DESCRIPTION DETAILLEE DE L'INVENTION

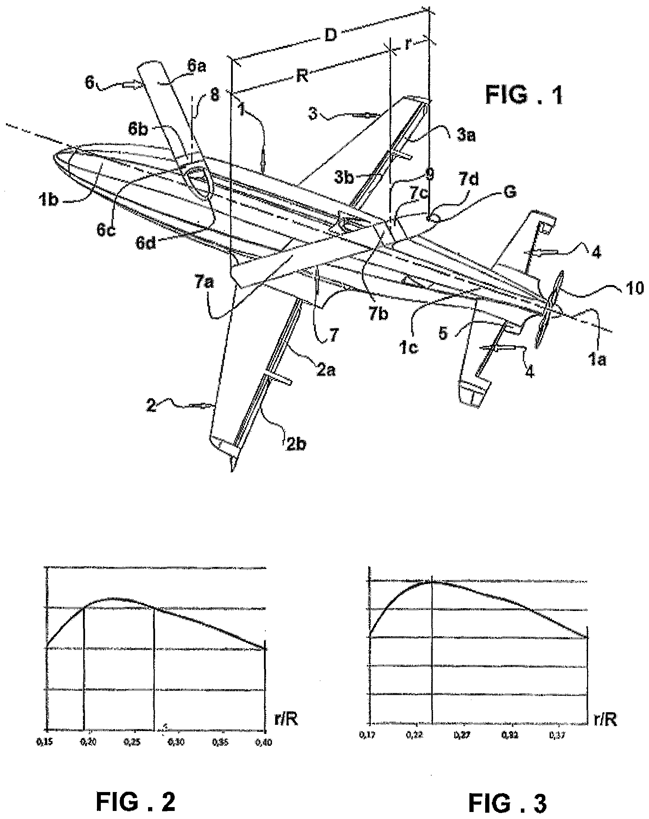

L'aérodyne représenté comporte un fuselage 1 dont l'axe de roulis est noté 1a. Ce fuselage est équipé d'une voilure fixe comportant une aile principale 2, 3, un empennage 4 en U inversé et une dérive 5, tout cela de manière usuelle et bien connue de l'homme de métier. On aura noté que l'aile 2, 3 possède respectivement des volets 2a, 2b, 3a, 3b, rabattus à la figure 1.

De manière connue, les branches horizontales de l'empennage 4 comportent également des volets.

L'aérodyne selon l'invention comporte une mono-pale avant 6 et une mono-pale arrière 7. La mono-pale avant 6 comprend une pale active 6a qui génère une portance pendant sa rotation. Cette mono-pale est composée d'une première partie 6b qui porte ladite pale active et constitue la liaison de la pale active à un mât rotor 8 et une deuxième partie 6c qui porte le contrepoids 6d et relie ce dernier au mât rotor 8. On notera que la partie 6c et le contrepoids 6d sont évidés pour améliorer leurs performances aérodynamiques.

L'ensemble ainsi constitué par la pale active 6a et la partie rigide 6b qui la porte est articulé autour d'un axe transversal, perpendiculaire à l'axe de rotation du rotor, sensiblement au niveau dudit axe de rotation du mât rotor. Cette disposition est connue en elle-même et rappelée dans le document WO2017021608 A1 déjà cité.

La mono-pale 7 arrière est de même constitution que la pale 6 avec une pale active 7a, un contrepoids 7d et des parties rigides 7b et 7c de liaison de ces deux éléments à un mât rotor 9.

A l'arrière du fuselage, l'aérodyne possède un propulseur 10 (par exemple à hélices) destiné à produire une poussée lors du vol de croisière.

Selon l'invention, pour une dimension D de chaque mono pale, par exemple sur la figure la pale 7, mesurée entre le centre de gravité G du contrepoids, et l'extrémité de la partie active 7a de la pale, l'axe 8 du mât rotor divise la pale en deux parties valant D/6 pour la partie « r » qui correspond au rayon de giration du centre de gravité G du contrepoids avant qui contient le contrepoids et 5D/6 pour la partie « R » arrière correspondant à la somme des sections 7a et 7b de la mono pale. Autrement dit l'axe du mat rotor est disposé de manière que r/R soit sensiblement égal à 0,2. Cette valeur constitue la valeur préférée de l'intervalle 0,15 - 0,25 dans lequel tout aérodyne tomberait sous le coup de la présente invention.

Cette disposition est particulièrement intéressante dans le cas d'un aérodyne à 2 ou 2n mono pales. Elle permet en effet, pour un cahier des charges donné, d'optimiser la relation entre les différents paramètres (liés entre eux) que sont la puissance de l'appareil, la charge utile et les dimensions de ce dernier, notamment la distance entre rotors.

La courbe du graphe de la figure 2 illustre l'allure de la variation de la charge utile en fonction du rapport r/R pour un rotor développant une puissance constante tandis que la courbe du graphe de la figure 3 illustre l'allure de la courbe de la charge utile en fonction du rapport r/R pour un appareil d'une masse maximale donnée et constante. On constate dans les deux graphes que la charge utile passe par un maximum autour d'une valeur de r/R au voisinage de 0,25 en tout cas dans une zone entre 0,15 et 0,40.

## Revendications

1. Aérodyne hybride comprenant un fuselage (1), une voilure fixe (2, 4) et au moins deux voilures (6, 7) tournantes, celles-ci étant apte à produire de la portance par leur rotation en phase de vol vertical et à être immobilisées et stockées longitudinalement en phase de vol de croisière, chaque voilure tournante étant du type mono-pale comprenant au moins une pale active (6a, 7a), une première partie rigide de liaison (6b, 7b) de cette pale active à un mât rotor (8, 9), un contrepoids (6d, 7d) et une deuxième partie rigide de liaison (6c, 7c) de ce contrepoids (6d, 7d) au mât rotor (8, 9), chaque voilure tournante étant située au sommet du fuselage (1), les mâts rotor (8, 9) étant espacés l'un de l'autre le long de l'axe de roulis (1a) de l'aérodyne,
**caractérisé en ce que**, pour chaque voilure tournante, la longueur (r) du rayon de giration du centre de gravité du contrepoids (6d, 7d) est comprise entre 15 et 40% de la longueur totale (R) de la pale active (6a, 7a) et de sa partie de liaison (6b, 7b) au mât rotor (8, 9) et de préférence entre 20 et 25%, et **en ce que** la longueur de chaque mono-pale est sensiblement égale à la distance séparant les deux mâts rotor (8, 9) successifs le long de l'axe de roulis.

## Patentansprüche

1. Hybridflügler mit einem Rumpf (1), einem feststehenden Flügel (2, 4) und mindestens zwei rotierenden Flügeln (6, 7), die in der Lage sind, durch ihre Rotation in der Vertikalflugphase Auftrieb zu erzeugen und in der Reiseflugphase in Längsrichtung festgesetzt und verstaut werden können, wobei jeder rotierende Flügel vom Typ eines Einzelblatts ist, das mindestens ein aktives Blatt (6a, 7a), einen ersten starren Verbindungsteil (6b, 7b) dieses aktiven Blatts mit einem Rotormast (8, 9), ein Gegengewicht (6d, 7d) und einen zweiten starren Verbindungsteil (6c, 7c) dieses Gegengewichts (6d, 7d) mit dem Rotormast (8, 9) umfasst, wobei sich jeder rotierende Flügel an der Oberseite des Rumpfes (1) befindet und die Rotormasten (8, 9) entlang der Rollachse (la) des Luftfahrzeugs mit Abstand voneinander angeordnet sind,
**dadurch gekennzeichnet, dass** für jeden rotierenden Flügel die Länge (r) des Drehradius des Schwerpunkts des Gegengewichts (6d, 7d) zwischen 15 und 40 % der Gesamtlänge (R) des aktiven Flügels (6a, 7a) und seines Verbindungsteils (6b, 7b) mit dem Rotormast beträgt (8, 9) und bevorzugt zwischen 20 und 25 % beträgt, und dass die Länge jedes Einzelblatts im Wesentlichen dem Abstand zwischen den beiden aufeinanderfolgenden Rotormasten (8, 9) entlang der Rollachse entspricht.

## Claims

1. Hybrid aerodyne comprising a fuselage (1), a fixed wing (2, 4) and at least two rotating wings (6, 7), these being capable of producing lift by their rotation in the vertical phase of flight and of being immobilized and stored longitudinally in the cruising phase of flight, each rotating wing being of the single-blade type comprising at least one active blade (6a, 7a), a first rigid part (6b, 7b) for connecting this active blade to a rotor mast (8, 9), a counterweight (6d, 7d) and a second rigid part (6c, 7c) for connecting this counterweight (6d, 7d) to the rotor mast (8, 9), each rotating wing being located at the top of the fuselage (1), the rotor masts (8, 9) being spaced apart from each other along the roll axis (1a) of the aerodyne,
**characterized in that**, for each rotary wing, the length (r) of the radius of gyration of the centre of gravity of the counterweight (6d, 7d) is between 15 and 40% of the total length (R) of the active blade (6a, 7a) and its portion (6b, 7b) for connecting to the rotor mast (8, 9) and preferably between 20 and 25%, and **in that** the length of each single blade is substantially equal to the distance between the two successive rotor masts (8, 9) along the roll axis.
